# EUROPEAN PATENT SPECIFICATION

(11) **EP 3 287 671 B1**
(45) Date of publication and mention of the grant of the patent: **02.10.2019**
(21) Application number: 16783248.4
(22) Date of filing: 21.04.2016
(51) Int. Cl.: F16H 63/32

(54) **TRANSMISSION**
GETRIEBE
TRANSMISSION

(30) Priority: 23.04.2015 JP 2015088805
(43) Date of publication of application: 28.02.2018
(73) Proprietor: Aisin AI Co., Ltd., Nishio-shi, Aichi 445-0006 (JP)
(72) Inventor: ICHIKAWA, Masaya, Nishio-shi Aichi 445-0006 (JP); TANAKA, Hirotoshi, Nishio-shi Aichi 445-0006 (JP); OSAWA, Hideya, Nishio-shi Aichi 445-0006 (JP)
(74) Representative: TBK
(86) International application number: PCT/JP2016/062680
(87) International publication number: WO 2016/171227

(56) References cited:
- WO-A1-02/086354
- DE-A1- 19 843 584
- DE-A1-102007 013 929
- JP-A- S5 729 120
- JP-A- S5 729 120
- JP-A- H09 210 200
- JP-A- 2012 127 407

## Description

### TECHNICAL FIELD

The present invention relates to a transmission.

### BACKGROUND ART

Conventionally, a manual transmission is known, including shift forks to be swung by the axial movement of a transmission shaft, to select a gear corresponding to a shift position (Patent Literature 1).

Another known transmission includes shift forks each with a protrusion to be pressed and swung by a protrusion of a shaft, and a shaft twisting mechanism which sets, for each shift fork, a different axially twisting angle between the protrusion of the shaft and the protrusion of the shift fork. Thereby, a shift fork to drive can be selected according to the twisting angle. In this case, the twisting angle of the shaft depends on the select position.

Still another known transmission includes a shaft having a protrusion and a shift fork having a protrusion. At least one of the protrusions has an inclined face or a taper in order to reduce the interference between the relative movement of the protrusions at the time of a gear change for changing both of the shift position and the select position.

### CITATION LIST

### Patent Literature

Patent Literature 1: Japanese Patent Application Laid-open No. 2012-127407
WO 02/086354 A1 discloses a transmission according to the preamble of claim 1. A further transmission is known from DE 198 43 584 A1.

### SUMMARY OF INVENTION

### PROBLEM TO BE SOLVED BY THE INVENTION

However, due to the inclined face or the taper of the protrusion, it becomes necessary to additionally form a corner or a step on either of the contact face of the protrusion of the shaft and that of the shift fork, decreasing the area of the contact faces, which is not preferable.

An object of the present invention is, for example, to provide a transmission including a shift fork with a protrusion to be pressed and swung by a protrusion of a shaft, in which the protrusions of the shaft and the shift fork properly contact each other at their contact faces.

### MEANS FOR SOLVING PROBLEM

The object of the invention is achieved with a transmission according to claim 1. Further advantageous developments are subject-matter of the dependent claims.

In the transmission according to the present invention, the relatively moving direction of the first protrusions and the second protrusion along with the swing of the shift fork and the relatively moving direction of the first protrusions and the second protrusion along with the twist (rotation) of the second shaft are approximately orthogonal to each other. If the relatively moving direction of the first protrusions and the second protrusion along with the swing of the shift fork and the relatively moving direction thereof along with the twist (rotation) of the second shaft are parallel to each other, in order to reduce the interference between the relatively moving first protrusions and second protrusion at the time of the gear change for changing both the select position and the shift position, it may become necessary to narrow at least either of the contact faces of the first protrusions and the contact faces of the second protrusion in the relative moving direction, and add a corner or a step that bends in the relatively moving direction. In contrast, according to the present invention, the relatively moving direction of the first protrusions and the second protrusion along with the swing of the shift fork and the relatively moving direction of the first protrusions and the second protrusion along with the twist (rotation) of the second shaft are approximately orthogonal to each other. In this case, in order to reduce the interference between the first protrusions and the second protrusion relatively moving when both the select position and the shift position change, either of the contact faces of the first protrusions and the contact faces of the second protrusion has only to be narrowed in a direction intersecting with the relatively moving direction thereof along with the swing of the shift fork. This eliminates the necessity for adding, to the contact faces of the first protrusions and the second protrusion, the corners or the steps that bend in the relatively moving direction of the first protrusions and the second protrusion along with swing of the shift fork. Thus, according to the present invention, the first protrusions and the second protrusion can properly contact each other at their contact faces. Furthermore, this enables, for example, more compact placement of the shift fork and the second shaft than when the second shaft is provided on the opposite side of the swinging center of the shift fork.

In a preferred embodiment of the present invention the transmission, the second protrusion is positioned approximately in a center of the shift fork in an axial direction of the swinging center. Thus, for example, as compared with the second protrusion provided eccentrically in the axial direction of the swinging center of the shift fork, the shift fork can be swung in a balanced manner. Thereby, for example, the movable element can be moved more stably in the axial direction of the first shaft by the swinging of the shift fork.

In a further preferred embodiment of the present invention the transmission, the second protrusion has two faces facing the two first protrusions, and the two faces configured to be curved in an axial direction of the swinging center. Thus, for example, by the two faces, the second protrusion and the first protrusions can be inhibited from wearing off.

In a further preferred embodiment of the present invention the transmission comprises: a first component which is coupled to the second shaft and provided with one of the two first protrusions; and a second component which is coupled to the second shaft and provided with the other of the two first protrusions. Thus, for example, as compared with the two first protrusions branched from the same root, the first protrusions can be decreased in size without the root, which can make the transmission more compact in size.

### BRIEF DESCRIPTION OF DRAWINGS

FIG. 1 is an exemplary side view (partial transparent view) of a transmission according to an embodiment;
FIG. 2 illustrates an exemplary shift pattern of the transmission according to the embodiment;
FIG. 3 is an exemplary perspective view of a second shaft and a shift fork of the transmission according to the embodiment;
FIG. 4 is a magnified view of a part of FIG. 1 (partial cross-section);
FIG. 5 is an exemplary perspective view of the shift fork of the transmission according to the embodiment;
FIG. 6 is an exemplary front view of the shift fork of the transmission according to the embodiment;
FIG. 7 is a sectional view of FIG. 6 along VII-VII line;
FIG. 8 is a magnified view of a part of FIG. 1, showing the second shaft and the shift fork in a neutral position;
FIG. 9 illustrates a positional relationship between first protrusions and a second protrusion in FIG. 8;
FIG. 10 is a magnified view of a part of the transmission according to the embodiment, showing the shift fork in a first shift position;
FIG. 11 illustrates a positional relationship between the first protrusions and the second protrusion in FIG. 10;
FIG. 12 is a magnified view of a part of the transmission according to the embodiment, showing the shift fork in a second shift position; and
FIG. 13 illustrates a positional relationship between the first protrusions and the second protrusion in FIG. 12.

### DESCRIPTION OF EMBODIMENTS

An exemplary embodiment of the present invention is hereinafter disclosed. A structure of the following embodiment, and operations, results, and effects obtained by the structure are merely exemplary. The present invention can be achieved by other structures than the structure disclosed in the following embodiment. The present invention can attain at least one of the various effects obtained by the structure.

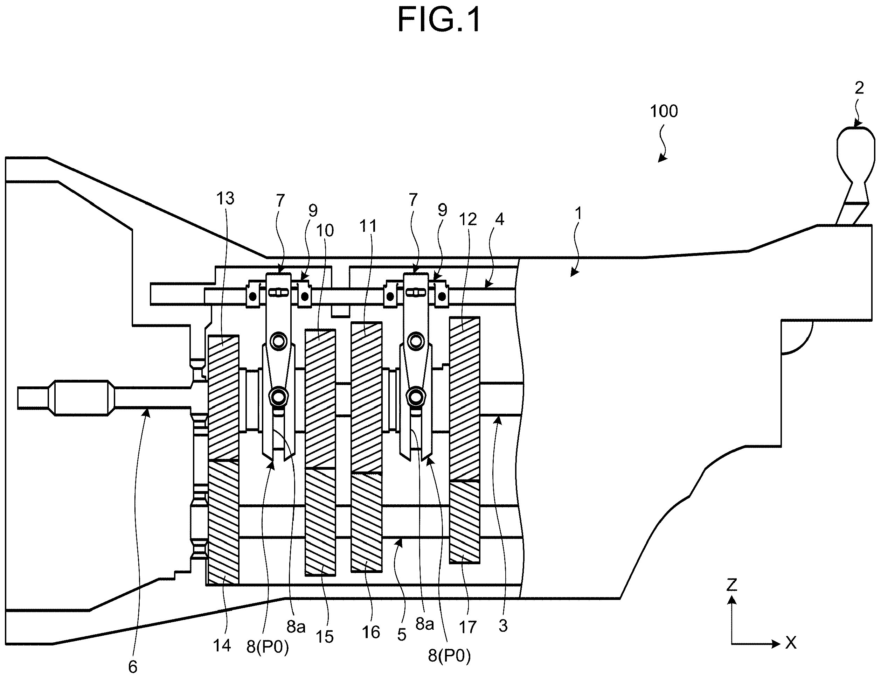

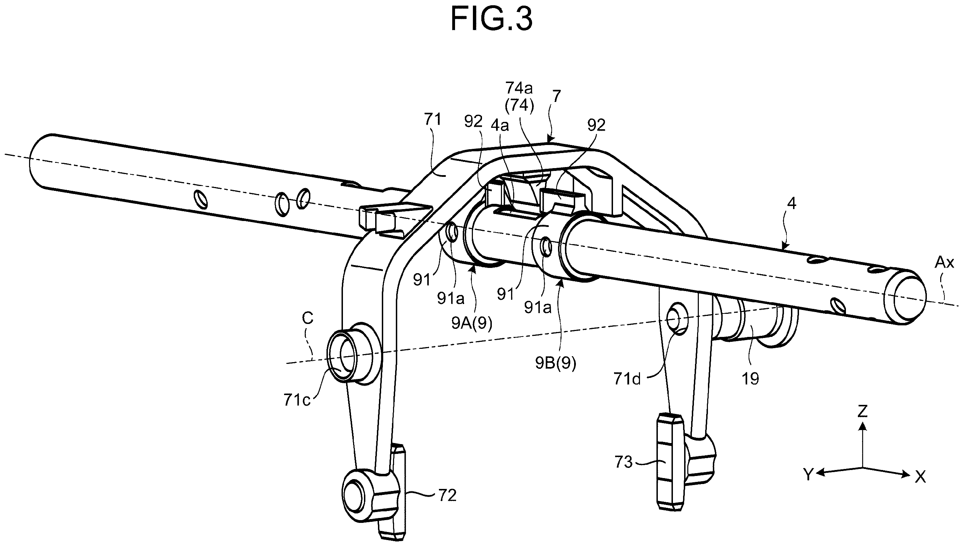

As illustrated in FIG. 1, a transmission 100 includes, for example, a case 1; a shift lever 2; shafts including an output shaft 3, a shift and select shaft 4, a counter shaft 5, and an input shaft 6; shift forks 7; movable elements 8; coupling members 9; and gears 10 to 17. The transmission 100 is positioned between an engine (not illustrated) being an input and a wheel (not illustrated) being an output. The transmission 100 can control the power (torque) of the engine in accordance with a running condition through the manipulation of the shift lever 2, to transmit the power to the wheel. In the following detailed description, directions are defined for convenience. X direction corresponds to an axial direction of a center Ax of the shift and select shaft 4 (vehicle front-back direction) (see FIG. 3), Y direction corresponds to an axial direction of a swinging center C of the shift fork 7 (vehicle width direction) (see FIG. 3), and Z direction corresponds to a radial direction of the center Ax and the swinging center C (vehicle vertical direction). The X direction, the Y direction, and the Z direction are orthogonal to each other. As illustrated in FIG. 1, in the present embodiment, the output shaft 3, the shift and select shaft 4, the counter shaft 5, and the input shaft 6 are parallel to each other in a standing posture (state) in the X direction, and these shafts are rotatably supported by the case 1. The output shaft 3 is one example of a first shaft, the shift and select shaft 4 is one example of a second shaft, the counter shaft 5 is one example of a third shaft, and the input shaft 6 is one example of a fourth shaft.

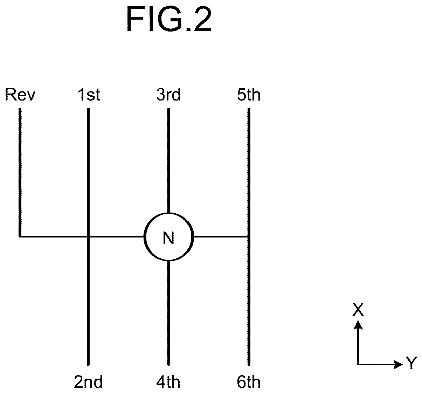

The shift lever 2 is movably supported by the case 1 in an approximately H-shaped shift pattern, as illustrated in FIG. 2. In the present embodiment, for example, the shift lever 2 is moved in the shift pattern in the Y direction for select operation while the shift lever 2 is moved in the shift pattern in the X direction for shift operation. In the present embodiment, while the shift lever 2 is placed between different shift positions, the gears 10 to 17 cannot be selected, placing the transmission 100 in a neutral state N in which the input side and the output side are disconnected from each other.

The transmission 100 is provided with a select position for selecting a reverse (R) shift, a select position for selecting first-second speed shifts, a select position for selecting third-fourth speed shifts, and a select position for selecting fifth-sixth speed shifts in parallel to each other at intervals in the Y direction. The R shift is provided in the same direction as the first speed shift of the first-second speed shifts (upper side in FIG. 2). In the present embodiment, at each of the four select positions, by moving the shift lever 2 in the X direction (upward in FIG. 2), the gears can be shifted to the reverse (R), the first speed, the third speed, or the fifth speed. At each of the three select positions other than the one for the R shift, by moving the shift lever 2 in the opposite X direction (downward in FIG. 2), the gears can be shifted to the second speed, the fourth speed, or the sixth speed. The shift positions and the select positions are assumed to be set for each component.

The shift lever 2 is connected to the shift and select shaft 4 illustrated in FIG. 1 and FIG. 3 through a conversion mechanism that is not illustrated. In the present embodiment, the shift and select shaft 4 is configured to move in the X direction in accordance with the shift operation of the shift lever 2 in the X direction, and to rotate around the center Ax in accordance with the select operation of the shift lever 2 in the Y direction. In the present embodiment, for example, the shift and select shaft 4 moves in the X direction (rightward in FIG. 1) as the shift lever 2 moves in the X direction, and moves in the opposite X direction (leftward in FIG. 1) as the shift lever 2 moves in the opposite X direction. In addition, the shift and select shaft 4 is rotated (twisted) in one direction around the center Ax as the shift lever 2 moves in the Y direction (rightward in FIG. 2), and is rotated (twisted) in the opposite direction around the center Ax as the shift lever 2 moves in the opposite Y direction (leftward in FIG. 2). The shift and select shaft 4 is movably supported by the case 1 in the X direction and rotatable around the center Ax. Thus, in the present embodiment, the shift and select shaft 4 follows (works with) both of the shift operation and the select operation of the shift lever 2. The shift and select shaft 4 may be also referred to as a fork shaft.

As illustrated in FIG. 1, the input shaft 6 is positioned on the opposite side of the output shaft 3 in the X direction (the left side in FIG. 1). The input shaft 6 and the output shaft 3 are, for example, coaxially aligned with each other in the X direction. However, the input shaft 6 and the output shaft 3 are separated from each other and do not rotate together. The input shaft 6 receives the power (torque) of the engine. The input shaft 6 is coupled with the gear 13 through, for example, pressure fitting or spline coupling. The gear 13 is thus rotated together with the input shaft 6. The gear 13 rotates the counter shaft 5 by engaging with the gear 14 integrated with the counter shaft 5.

The counter shaft 5 is positioned on the opposite side of the output shaft 3 and the input shaft 6 in the Z direction (the lower side in FIG. 1). The counter shaft 5 is coupled with the gears 14 to 17 through, for example, pressure fitting or spline coupling. The gears 14 to 17 are thus rotated together with the counter shaft 5. The gears 15 to 17 are engaged with the gears 10 to 12 of the output shaft 3, respectively. The gears 13 and 15 to 17 may be also called driving gears, for example, and the gears 10 to 12 and 14 may be also called driven gears, for example.

The output shaft 3 is positioned between the shift and select shaft 4 and the counter shaft 5 spaced apart from each other in the Z direction. The output shaft 3 is supported rotatably by the case 1. The gears 10 to 12 are supported by the output shaft 3 so as to be relatively rotatable through, for example, a bearing. The output shaft 3 may be also called a main shaft. FIG. 1 illustrates four pairs of engaging gears 10 to 17 for convenience, however, the number of gear pairs can be determined depending on the shift pattern in practice.

The movable element 8 is supported by the output shaft 3 by, for example, spline coupling. Specifically, the movable element 8 rotates together with the output shaft 3. The movable element 8 is movably supported by the output shaft 3 in the X direction (axial direction). The movable element 8 is positioned between the two adjacent gears 11 and 12 in the X direction, as illustrated in FIG. 1. In the present embodiment, multiple movable elements 8 are spaced apart from each other in the X direction corresponding to the pairs of adjacent gears 10 to 17 in the X direction. The movable elements 8 may be also called sleeves.

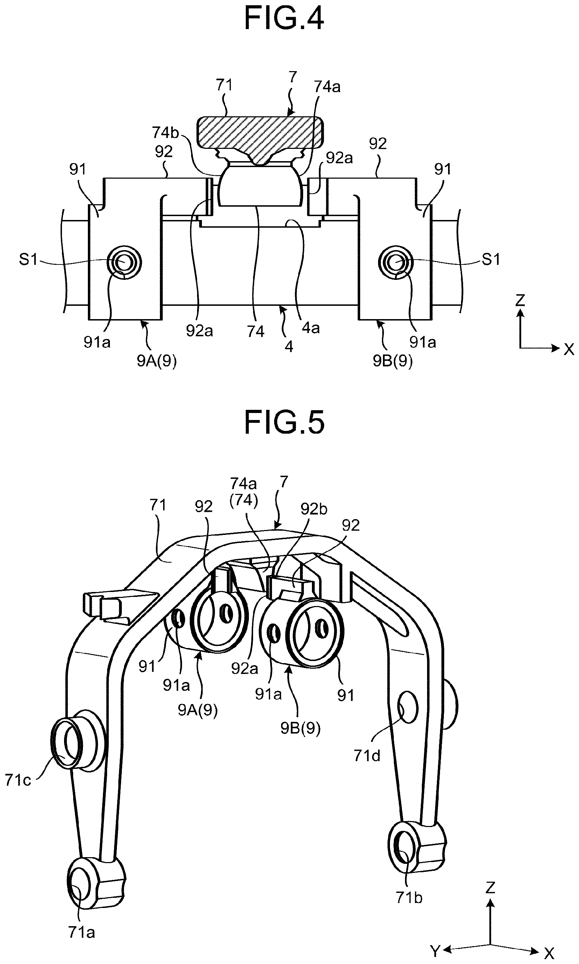

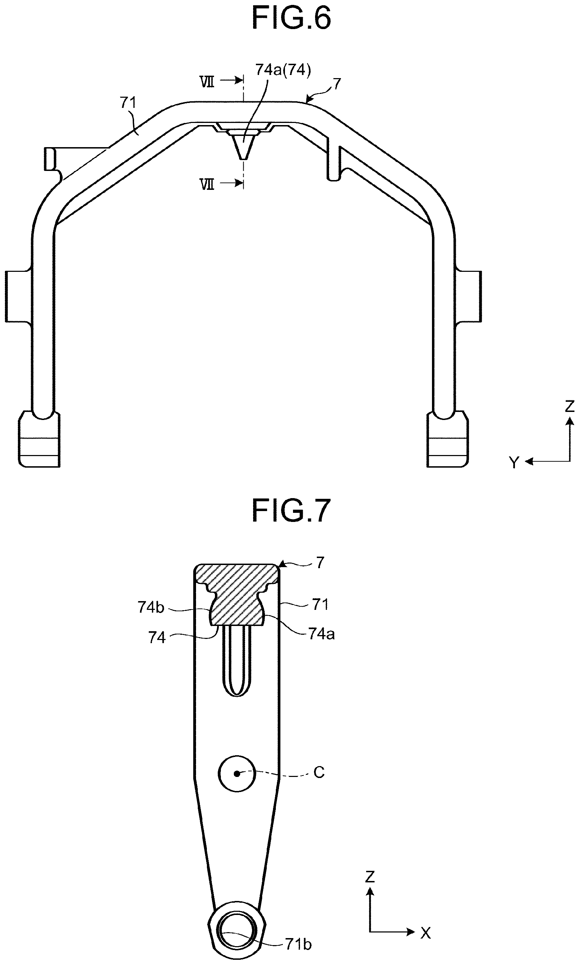

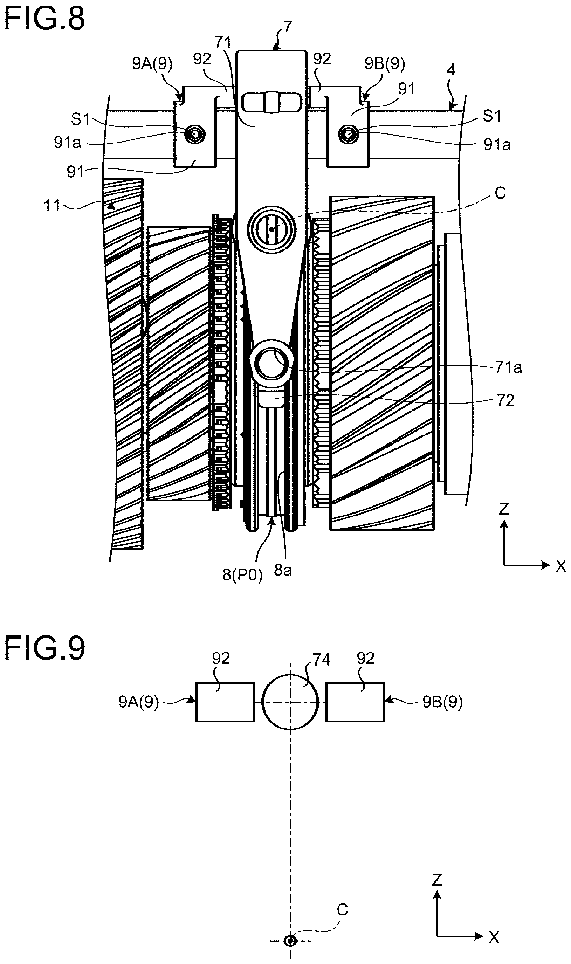

As illustrated in FIG. 3, the shift forks 7 each include, for example, an arm 71, supporters 72 and 73, and a second protrusion 74 as a protrusion. The arm 71 has an approximately U-shape open in the opposite Z direction (to the lower side in FIG. 6, to the movable element 8), when viewed in the X direction in FIG. 6. As illustrated in FIG. 5, both ends of the arm 71 in the opposite Z direction (the lower side in FIG. 5) are provided with openings 71a and 71b, respectively. The openings 71a and 71b penetrate through the arm 71 in the Y direction. As illustrated in FIG. 3, the supporters 72 and 73 are connected to the two openings 71a and 71b rotatably around shafts extending in the Y direction. The supporters 72 and 73 are formed of a member different from the arm 71 (for example, a slidable member made of a synthetic resin material). As illustrated in FIG. 1 and FIG. 8, the supporters 72 and 73 are inserted into a groove 8a in the outer periphery of the movable element 8, to support the movable element 8 that rotates together with the output shaft 3.

As illustrated in FIG. 5, the arm 71 is provided with openings 71c and 71d which are further (higher in FIG. 5) in the Z direction than the openings 71a and 71b. The openings 71c and 71d penetrate through the arm 71 in the Y direction. As illustrated in FIG. 3, the two openings 71c and 71d have a shaft member 19 inserted thereinto, the shaft member 19 being joined to the case 1. Thereby, the shaft member 19 swingably supports the arm 71, that is, the shift fork 7 around the swinging center C.

As illustrated in FIG. 5 and FIG. 6, the arm 71 includes the second protrusion 74 at one end (upper end in FIG. 5 and FIG. 6) in the Z direction. In the present embodiment, the second protrusion 74 protrudes from a face (inner face) of the arm 71 on the movable element 8 side in the opposite Z direction (downward in FIG. 5 and FIG. 6). As illustrated in FIG. 3 and FIG. 6, the second protrusion 74 is placed approximately at the center of the arm 71 in the Y direction. In the present embodiment, the second protrusion 74 and the center Ax of the shift and select shaft 4 are aligned in the Z direction. In addition, as illustrated in FIG. 4, the second protrusion 74 has two faces 74a and 74b facing two first protrusions 92 and 92 of the coupling member 9. The two faces 74a and 74b have an approximately arc (curved) shape in the Y direction, as illustrated in FIG. 4 and FIG. 7, for example. The second protrusion 74 may be also called a shift head.

As illustrated in FIG. 4, the shift and select shaft 4 is provided with a recess 4a to face the second protrusion 74. The recess 4a is, for example, open in the Z direction (to the upper side in FIG. 4, to the second protrusion 74), and is depressed oppositely to the second protrusion 74. The recess 4a and the second protrusion 74 are located to overlap with each other in the Z direction. According to the present embodiment, thus, by the recess 4a, the shift and select shaft 4 and the second protrusion 74 can be disposed closer to each other, for example.

As illustrated in FIG. 4 and 5, the coupling members 9 each include, for example, bases 91 and the first protrusions 92 as protrusions. The bases 91 have a cylindrical shape along the outer surface of the shift and select shaft 4. The bases 91 are each provided with an opening 91a penetrating the base 91 in the Y direction. As illustrated in FIG. 4, in the present embodiment, for example, the coupling member 9 and the shift and select shaft 4 are coupled to each other through coupling tools S1 such as connecting pins or screws that penetrate through the openings 91a and an opening (not illustrated) in the shift and select shaft 4. As illustrated in FIG. 4, the openings 91a may be long holes with a larger diameter than that of the coupling tools S1. Thus, manufacturing variation (dimensional variation) can be resolved, which results in adjusting the distance between the two first protrusions 92 and 92.

Each base 91 includes the first protrusion 92 at one end in the Z direction (upper end in FIG. 4), protruding from the end in the Z direction toward the second protrusion 74. Each of the first protrusions 92 overlaps with the second protrusion 74 viewed in the X direction (axial direction) while the shift and select shaft 4 is in one of the two or more (four) select positions. The coupling member 9 may be also called an inner lever.

In the present embodiment, the coupling member 9 each include, for example, a first component 9A and a second component 9B. In the present embodiment, the first component 9A is provided with one of the two first protrusions 92 and 92, and the second component 9B is provided with the other of the two first protrusions 92 and 92. With one component including the two first protrusions 92 and 92, for example, different components with the two protrusions 92 and 92 at different spacings may be required for the shift forks 7 having different specifications such as the size and shape of the second protrusion 74. In this regard, the present embodiment includes the first component 9A provided with one of the first protrusions 92 and the second component 9B provided with the other, which can increase the degree of freedom in setting the distance between the two first protrusions 92 and 92. Thus, for example, the components can be commonly used for the shift forks 7 having different specifications such as the size and shape of the second protrusion 74.

As illustrated in FIG. 5, each of the first protrusions 92 includes two corners 92a and 92b facing the second protrusion 74. As illustrated in FIG. 4, in the present embodiment, for example, the two corners 92a and 92b are chamfered. Thus, according to the present embodiment, for example, at the time of a gear change for changing both the shift position and the select position, the interference between the relatively moving first and second protrusions 92 and 74 can be reduced.

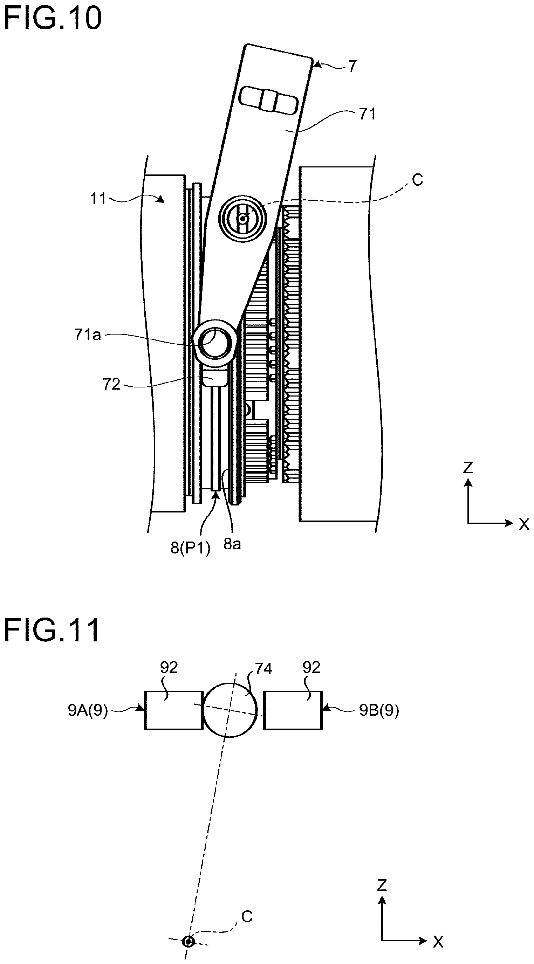

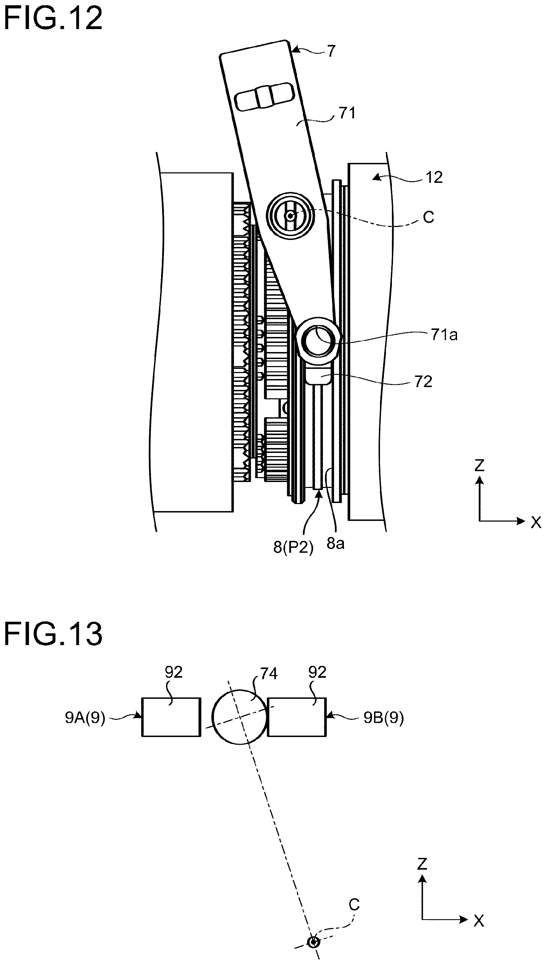

As illustrated in FIG. 1, in the present embodiment, the coupling members 9 are spaced apart from each other in the X direction in accordance with the shift forks 7 aligned in the X direction. In the present embodiment, for example, the first protrusions 92 and the second protrusion 74 oppose each other at different angles in the X direction at each of the four select positions (FIG. 2) around the center Ax of the shift and select shaft 4. That is to say, in the present embodiment, the pair of the shift fork 7 and the coupling member 9 with the first protrusions 92 and the second protrusion 74 facing each other changes in accordance with each of the four select positions. By moving the shift and select shaft 4 from each select position in the X direction while the first protrusions 92 and the second protrusion 74 face each other (FIG. 9), one of the two first protrusions 92 and 92 presses the second protrusion 74 in the X direction (FIG. 11 and FIG. 13). This causes the shift fork 7 to swing around the swinging center C, moving the movable element 8 among a first coupling position P1 (FIG. 10), a second coupling position P2 (FIG. 12), and a neutral position P0 (FIG. 8).

As illustrated in FIG. 10 and FIG. 11, at the first coupling position P1, the movable element 8 is, for example, coupled to the gear 11 of the two neighboring gears 11 and 12 in the X direction to rotate together with the gear 11. That is, the gear 11 and the output shaft 3 rotate together. This forms a rotation transmission route of a first gear stage from the input shaft 6 to the gear 13, the gear 14, the counter shaft 5, the gear 16, the gear 11, and the output shaft 3 as illustrated in FIG. 1.

As illustrated in FIG. 12 and FIG. 13, at the second coupling position P2, the movable element 8 is coupled to the other gear 12 of the two neighboring gears 11 and 12 in the X direction, to rotate together with the gear 12. That is, the gear 12 and the output shaft 3 rotate together. This forms a rotation transmission route of a second gear stage from the input shaft 6 to the gear 13, the gear 14, the counter shaft 5, the gear 17, the gear 12, and the output shaft 3 as illustrated in FIG. 1.

While the movable element 8 is in the neutral position P0, as illustrated in FIG. 8 and FIG. 9, the gears 11 and 12 do not engage with the output shaft 3. Thereby, the transmission 100 is placed in the neutral state in which the input side and the output side are disconnected. In the present embodiment, shifting the shift lever 2 from each select position in the X direction (to the right side in FIG. 8) as described above moves the shift and select shaft 4 in the X direction (rightward in FIG. 8). Because of this, at the first coupling position P1, the shift fork 7 swings clockwise in FIG. 10 to be coupled to the gear 11 of the two gears 11 and 12, which is further in the opposite X direction (on the left side in FIG. 10). In other words, in the present embodiment, at each of the select positions for the first-second speed shifts, the third-fourth speed shifts, and the fifth-sixth speed shifts, the lower-speed gears can be disposed in the opposite X direction (on the left side in FIG. 1) while the higher-speed gears can be disposed in the X direction (on the right side in FIG. 1).

As described above, in the present embodiment, for example, the transmission 100 includes the case 1; the output shaft 3 (first shaft) which is housed in the case 1 and rotatably supported by the case 1; the gears 10 to 12 which are housed in the case 1 and rotatable relative to the output shaft 3; the movable elements 8 which rotate together with the output shaft 3 and are movable in the X direction (axial direction of the output shaft 3) in the case 1, and selectively couple one of the gears 10 to 12 with the output shaft 3 to rotate them together; the shift and select shaft 4 (second shaft) which is movably supported by the case 1 in the X direction and rotatable around the center Ax, and moved to the two shift positions in the X direction at each of the select positions around the center Ax; the shift forks 7 which are swingably supported by the case 1 and move the movable elements 8 in the X direction along with the motion of the shift and select shaft 4 to the two shift positions; the two first protrusions 92 and 92 which are provided on the shift and select shaft 4 (one) and spaced apart from each other in the X direction; and the second protrusion 74 which is provided on the shift fork 7 (the other) and when the shift and select shaft 4 is in one of the select positions, is positioned between the two first protrusions 92 and 92 and overlaps with the first protrusions 92 and 92 viewed from the X direction. The protruding direction of the first protrusions 92 and 92 and the protruding direction of the second protrusion 74 are set to the Z direction that is orthogonal to the swinging center C of the shift fork 7 as viewed in the X direction. That is to say, the first protrusions 92 and 92 and the second protrusion 74 protrude in the Z direction from the shift and select shaft 4 and the shift fork 7 respectively, as viewed in the X direction.

Thus, according to the present embodiment, the relatively moving direction of the first protrusions 92 and the second protrusion 74 along with the swing of the shift fork 7 and the relatively moving direction of the first protrusions 92 and the second protrusion 74 along with the twist (rotation) of the shift and select shaft 4 are approximately orthogonal to each other. If the relatively moving direction of the first protrusions 92 and the second protrusion 74 along with the swing of the shift fork 7 and the relatively moving direction thereof along with the rotation (twist) of the shift and select shaft 4 are parallel to each other, in order to reduce the interference between the first protrusions 92 and second protrusion 74 relatively moving at the time of gear changing for changing both the select position and the shift position, it may be necessary to narrow at least either of the contact faces of the first protrusions 92 and the contact faces of the second protrusion 74 in the relatively moving direction, and add, thereto, a corner or a step that bends in the relatively moving direction. In contrast, according to the present embodiment the relatively moving direction of the first protrusions 92 and the second protrusion 74 along with the swing of the shift fork 7 and that of the first protrusions 92 and the second protrusion 74 along with the twist (rotation) of the shift and select shaft 4 are approximately orthogonal to each other. In order to reduce the interference between the first protrusions 92 and second protrusion 74 relatively moving when both the select position and the shift position change, either of the contact faces of the first protrusions 92 and the contact faces (faces 74a, 74b) of the second protrusion 74 has only to be narrowed in a direction intersecting with the relative moving direction of the first protrusions 92 and the second protrusion 74 along with the swing of the shift fork 7. This eliminates the necessity for adding, to the contact faces of the first protrusion 92 and the second protrusion 74, the corner or the step that bends in the relatively moving direction of the first protrusions 92 and the second protrusion 74 along with the swing of the shift fork 7. Thus, according to the present embodiment, the contact faces of the first protrusions 92 of the shift and select shaft 4 can properly contact the contact faces (faces 74a, 74b) of the second protrusion 74 of the shift fork 7. In the present embodiment the shift and select shaft 4 includes the first protrusions 92 and the shift fork 7 includes the second protrusion 74; however, the shift fork 7 may include the first protrusions 92 and the shift and select shaft 4 may include the second protrusion 74.

In addition, in the present embodiment, for example, the second protrusion 74 is positioned approximately in the center of the shift fork 7 in the axial direction (Y direction) of the swinging center C. Thus, according to the present embodiment, for example, the shift fork 7 can be swung in a balanced manner, as compared with the one including the second protrusion 74 eccentrically in the axial direction (Y direction) of the swinging center C of the shift fork 7. Thus, by the swinging of the shift fork 7, for example, the movable element 8 can be more stably moved in the axial direction (X direction) of the output shaft 3.

Moreover, in the present embodiment, for example, the second protrusion 74 has the two faces 74a and 74b facing the two first protrusions 92 and 92, and the two faces 74a and 74b are curved faces. That is to say, the two faces 74a and 74b are curved when viewed in the axial direction (Y direction) of the swinging center C. Thus, according to the present embodiment, for example, owing to the two faces 74a and 74b, the second protrusion 74 and the first protrusions 92 can be inhibited from wearing off.

In the present embodiment, for example, the shift fork 7 is provided with the second protrusion 74 and the shift and select shaft 4 is positioned between the second protrusion 74 and the swinging center C of the shift fork 7. That is, according to the present embodiment, for example, the shift fork 7 and the shift and select shaft 4 can be more compactly disposed in the case 1 than when the shift and select shaft 4 is provided on the opposite side of the swinging center C of the shift fork 7.

The present embodiment includes, for example, the first component 9A which is coupled to the shift and select shaft 4 and is provided with one of the two first protrusions 92 and 92, and the second component 9B which is coupled to the shift and select shaft 4 and is provided with the other of the two first protrusions 92 and 92. Thus, for example, as compared with the two first protrusions 92 and 92 branched from the same root, the present embodiment can omit the root and decrease the size of the first protrusions 92 and 92 (coupling member 9). As a result, the transmission 100 can be made more compact in size. In addition, as compared with one component provided with the two first protrusions 92 and 92, the degree of freedom in setting the distance between the two first protrusions 92 and 92 can be increased. This, for example, allows the common use of components for different shift forks 7 having different specifications including the size and shape of the second protrusion 74.

In the present embodiment, for example, the first protrusions 92 each include the two corners 92a and 92b facing the second protrusion 74, and the two corners 92a and 92b are chamfered. According to the present embodiment, for example, it is hence possible to reduce the interference between the first protrusions 92 and the second protrusion 74 relatively moving at the time of the gear change for changing both the shift position and the select position.

In addition, in the present embodiment, for example, the shift and select shaft 4 is provided with the recess 4a that is depressed away from the second protrusion 74. According to the present embodiment, for example, it is made possible to dispose the shift and select shaft 4 and the second protrusion 74 closer to each other. This can, for example, make the transmission 100 more compact in size.

### EXPLANATIONS OF LETTERS OR NUMERALS

- 1: CASE
- 3: OUTPUT SHAFT (FIRST SHAFT)
- 4: SHIFT AND SELECT SHAFT (SECOND SHAFT)
- 7: SHIFT FORK
- 8: MOVABLE ELEMENT
- 9A: FIRST COMPONENT
- 9B: SECOND COMPONENT
- 10 to 12: GEAR
- 74: SECOND PROTRUSION
- 74a, 74b: FACE
- 92: FIRST PROTRUSION
- Ax: CENTER
- C: SWINGING CENTER
- X: AXIAL DIRECTION OF CENTER Ax
- Y: AXIAL DIRECTION OF SWINGING CENTER C
- Z: RADIAL DIRECTION OF SWINGING CENTER C

## Claims

1. A transmission (100) comprising:
a case (1);
a first shaft (3) which is housed in the case (1) and rotatably supported by the case (1);
a plurality of gears (10; 11; 12) which is housed in the case (1) and rotatably provided relative to the first shaft (3);
a movable element (8) configured to rotate together with the first shaft (3) in the case (1) and to be movable in an axial direction of the first shaft (3), and selectively couples one of the gears (10; 11; 12) with the first shaft (3) to be rotatable together;
a second shaft (4) which is movably supported by the case (1) in an axial direction (X) of the second shaft (4) and rotatable around a shaft center (Ax) representing select positions of the transmission, wherein the second shaft (4) is moved to two shift positions in the axial direction of the second shaft (4) at each of the select positions;
a shift fork (7) which is swingably supported by the case (1) and moves the movable element (8) in the axial direction of the first shaft (3) by swing of the shift fork (7) in accordance with an axial motion of the second shaft (4) to the two shift positions;
two first protrusions (92) which are provided on the second shaft (4) and spaced apart from each other in the axial direction (X) of the second shaft (4); and
a second protrusion (74) which is provided on the shift fork (7),
the transmission being **characterized in that**
the second protrusion (74), when the shift fork (7) is selected by rotation of the second shaft (4) being now in one of the select positions, is positioned between the two first protrusions (92) and overlaps with the first protrusions (92) viewed from the axial direction (X) of the second shaft (4),
wherein
the shift fork (7) swings by movement of the second shaft (4) in the axial direction (X) of the second shaft (4) when the two first protrusions (92) and the second protrusion (74) overlap with each other viewed from the axial direction (X) of the second shaft (4),
wherein a protruding direction (Z) of the first protrusions (92) and a protruding direction (Z) of the second protrusion (74) are orthogonal to a swinging center (C) of the shift fork (7) when viewed in the axial direction (X) of the second shaft (4),
wherein the second protrusion (74) protrudes from the shift fork (7) toward the swinging center (C),
an wherein the second shaft (4) is positioned between the second protrusion (74) and the swinging center (C) viewed in the axial direction (X) of the second shaft (4) .

2. The transmission (100) according to claim 1, wherein the second protrusion (74) is positioned approximately in a center of the shift fork (7) in an axial direction of the swinging center.

3. The transmission (100) according to claim 1 or 2, wherein the second protrusion (74) has two faces facing the two first protrusions (92), and
the two faces configured to be curved in an axial direction of the swinging center.

4. The transmission (100) according to any one of claims 1 to 3, comprising:
a first component (9A) which is coupled to the second shaft (4) and provided with one of the two first protrusions (92); and
a second component (9B) which is coupled to the second shaft (4) and provided with the other of the two first protrusions (92).

## Patentansprüche

1. Getriebe (100) mit:
einem Gehäuse (1);
einer ersten Welle (3), die in dem Gehäuse (1) beherbergt ist und durch das Gehäuse (1) drehbar gestützt ist;
einer Vielzahl von Zahnrädern (10; 11; 12), die in dem Gehäuse (1) beherbergt sind und drehbar relativ zu der ersten Welle (3) vorgesehen sind;
einem beweglichen Element (8), das gestaltet ist, um zusammen mit der ersten Welle (3) in dem Gehäuse (1) zu drehen und um in einer Axialrichtung der ersten Welle (3) beweglich zu sein, und das wahlweise eines der Zahnräder (10; 11; 12) mit der ersten Welle (3) koppelt, um zusammen drehen zu können;
einer zweiten Welle (4), die durch das Gehäuse (1) in einer Axialrichtung (X) der zweiten Welle (4) beweglich gestützt ist und um ein Wellenzentrum (Ax), die Auswahlpositionen des Getriebes repräsentiert, herum drehbar ist, wobei die zweite Welle (4) zu zwei Schaltpositionen in der Axialrichtung der zweiten Welle (4) bei jeder der Auswahlpositionen bewegt wird;
einer Schaltgabel (7), die durch das Gehäuse (1) schwenkbar gestützt ist und das bewegliche Element (8) in der Axialrichtung der ersten Welle (3) durch ein Schwenken der Schaltgabel (7) gemäß einer Axialbewegung der zweiten Welle (4) zu den zwei Schaltpositionen bewegt;
zwei ersten Vorsprüngen (92), die an der zweiten Welle (4) vorgesehen sind und voneinander in der Axialrichtung (X) der zweiten Welle (4) beabstandet sind; und
einem zweiten Vorsprung (74), der an der Schaltgabel (7) vorgesehen ist,
wobei das Getriebe **dadurch gekennzeichnet ist, dass**
der zweite Vorsprung (74), wenn die Schaltgabel (7) durch eine Drehung der zweiten Welle (4) ausgewählt ist, die nun in einer der Auswahlpositionen ist, zwischen den zwei ersten Vorsprüngen (92) positioniert ist und mit den ersten Vorsprüngen (92) überlappt, aus Sicht von der Axialrichtung (X) der zweiten Welle (4), wobei
die Schaltgabel (7) durch eine Bewegung der zweiten Welle (4) in der Axialrichtung (X) der zweiten Welle (4) schwenkt, wenn die zwei ersten Vorsprünge (92) und der zweite Vorsprung (74) miteinander überlappen, aus Sicht von der Axialrichtung (X) der zweiten Welle (4),
wobei eine Vorsprungsrichtung (Z) der ersten Vorsprünge (92) und eine Vorsprungsrichtung (Z) des zweiten Vorsprungs (74) senkrecht zu einem Schwenkzentrum (C) der Schaltgabel (7) sind, aus Sicht in der Axialrichtung (X) der zweiten Welle (4),
wobei der zweite Vorsprung (74) von der Schaltgabel (7) in Richtung zu dem Schwenkzentrum (C) vorsteht, und
wobei die zweite Welle (4) zwischen dem zweiten Vorsprung (74) und dem Schwenkzentrum (C) positioniert ist, aus Sicht in der Axialrichtung (X) der zweiten Welle (4).

2. Getriebe (100) nach Anspruch 1, wobei der zweite Vorsprung (74) ungefähr in einer Mitte der Schaltgabel (7) in einer Axialrichtung des Schwenkzentrums positioniert ist.

3. Getriebe (100) nach Anspruch 1, wobei der zweite Vorsprung (74) zwei Flächen hat, die den zwei Vorsprüngen (92) zugewandt sind, und
die zwei Flächen gestaltet sind, um in einer Axialrichtung des Schwenkzentrums gekrümmt zu sein.

4. Getriebe (100) nach einem der Ansprüche 1 bis 3, des Weiteren mit:
einer ersten Komponente (9A), die mit der zweiten Welle (4) gekoppelt ist und mit einem der zwei ersten Vorsprünge (92) versehen ist; und
einer zweiten Komponente (9B), die mit der zweiten Welle (4) gekoppelt ist und mit dem anderen der zwei ersten Vorsprünge (92) versehen ist.

## Revendications

1. Transmission (100) comprenant :
un carter (1) ;
un premier arbre (3) qui est logé dans le carter (1) et supporté en rotation par le carter (1) ;
une pluralité d'engrenages (10 ; 11 ; 12) qui est logée dans le carter (1) et prévue en rotation par rapport au premier arbre (3) ;
un élément mobile (8) configuré pour tourner conjointement avec le premier arbre (3) dans le carter (1) et être mobile dans une direction axiale du premier arbre (3) et couple sélectivement l'un des engrenages (10 ; 11 ; 12) avec le premier arbre (3) pour pouvoir tourner ensemble ;
un second arbre (4) qui est supporté, de manière mobile, par le carter (1) dans une direction axiale (X) du second arbre (4) et en rotation autour d'un centre d'arbre (Ax) représentant des positions de sélection de la transmission, dans laquelle le second arbre (4) est déplacé dans deux positions de changement de vitesse dans la direction axiale du second arbre (4) à chacune des positions de sélection ;
une fourchette de boîte de vitesses (7) qui est supportée, de manière oscillante par le carter (1) et déplace l'élément mobile (8) dans la direction axiale du premier arbre (3) par l'oscillation de la première fourchette de boîte de vitesses (7) selon un mouvement axial du second arbre (4) dans les deux positions de changement de vitesse ;
deux premières saillies (92) qui sont prévues sur le second arbre (4) et espacées l'une de l'autre dans la direction axiale (X) du second arbre (4) ; et
une seconde saillie (74) qui est prévue sur la fourchette de boîte de vitesses (7),
la transmission étant **caractérisée en ce que** :
la seconde saillie (74), lorsque la fourchette de boîte de vitesses (7) est sélectionnée par la rotation du second arbre (4) qui est maintenant dans l'une des positions de sélection, est positionnée entre les deux premières saillies (92) et recouvre les premières saillies (92) observées depuis la direction axiale (X) du second arbre (4),
dans laquelle :
la fourchette de boîte de vitesses (7) oscille grâce au mouvement du second arbre (4) dans la direction axiale (X) du second arbre (4) lorsque les deux premières saillies (92) et la seconde saillie (74) se chevauchent lorsqu'elles sont observées depuis la direction axiale (X) du second arbre (4),
dans laquelle :
une direction en saillie (Z) des premières saillies (92) et une direction en saillie (Z) de la seconde saillie (74) sont orthogonales à un centre d'oscillation (C) de la fourchette de boîte de vitesses (7) lorsqu'elles sont observées dans la direction axiale (X) du second arbre (4),
dans laquelle :
la seconde saillie (74) fait saillie de la fourchette de boîte de vitesses (7) vers le centre d'oscillation (C),
et dans laquelle :
le second arbre (4) est positionné entre la seconde saillie (74) et le centre d'oscillation (C) observé dans la direction axiale (X) du second arbre (4).

2. Transmission (100) selon la revendication 1, dans laquelle la seconde saillie (74) est approximativement positionnée dans un centre de la fourchette de boîte de vitesses (7) dans une direction axiale du centre d'oscillation.

3. Transmission (100) selon la revendication 1 ou 2, dans laquelle la seconde saillie (74) a deux faces faisant face aux deux premières saillies (92), et
les deux faces étant configurées pour être incurvées dans une direction axiale du centre d'oscillation.

4. Transmission (100) selon l'une quelconque des revendications 1 à 3, comprenant :
un premier composant (9A) qui est couplé au second arbre (4) et prévu avec l'une des deux premières saillies (92) ; et
un second composant (9B) qui est couplé au second arbre (4) et prévu avec l'autre des deux premières saillies (92).
